# EUROPEAN PATENT SPECIFICATION

(11) **EP 2 600 246 B1**
(45) Date of publication and mention of the grant of the patent: **13.09.2017**
(21) Application number: 12007698.9
(22) Date of filing: 14.11.2012
(51) Int. Cl.: G06F 9/48, G06F 11/14

(54) **BATCH PROCESSING OF BUSINESS OBJECTS**
Stapelverarbeitung von Geschäftsobjekten
Traitement par lots d'objets commerciaux

(30) Priority: 01.12.2011 US 201113309252
(43) Date of publication of application: 05.06.2013
(73) Proprietor: SAP SE, 69190 Walldorf (DE)
(72) Inventor: Brunswig, Frank, 69190 Walldorf (DE); Jentsch, Frank, 69190 Walldorf (DE); Said, Bare, 69190 Walldorf (DE)
(74) Representative: Müller-Boré & Partner Patentanwälte PartG mbB

(56) References cited:
- US-B2- 7 536 673
- US-B2- 7 801 996

## Description

### BACKGROUND

The present invention relates to business software and in particular to the processing of business objects.

Unless otherwise indicated herein, the approaches described in this section are not prior art to the claims in this application and are not admitted to be prior art by inclusion in this section.

A business enterprise typically employs several business applications in order to manage the large amounts of data in the enterprise. A business application is usually designed to handle a specific aspect of the enterprise; e.g., a customer relationship management (CRM) business application may support the activities of the sales department, a product production system (PPS) may be used to manage production, and so on. Business objects represent individual classes of data that a business application may manage. For instance, in a car rental system, the following business objects may be created:
- CAR - with attributes such as: license plate number, car model, number of seats, maximum speed, mileage, color,
- CUSTOMER - with attributes such as: first name, last name, credit card number, address, phone, fax, e-mail, date of registration,
- ORDER - with attributes such as: date, invoice number, price.
The business object (BO) is a basic entity that encapsulates the business data and business logic for manipulating the data, and guarantees the consistency and integrity of the business object data. An interface layer, describes the implementation and structure of the business object, and defines the business object's interface to the outside world.

A service provider is part of the access layer that provides external access to the business object's data via the interface. The service provider provides access to the methods of that business object for functionality such as common instance handling, event handing, error handling, state management of the business object, and so on. For example, all business objects provide a common set of core services in order to create, read, update, and delete business object instances (business object node instances); e.g., MODIFY may be a core service that is common to all business objects for creating, updating, and deletion. In addition, business objects may provide services (referred to herein as ACTIONS) that are specific to the business object.

The service provider may also provide auxiliary services such as performance analysis, tracing, and so on. Since many business users (e.g., sale manager, sales person, and so on) may need to access a business object at any one time, it can be appreciated that users are not given direct access to business objects or even to the service providers.

Instead, access to the service provider and hence to the business object itself is provided via a service manager. The service manager is responsible for transaction control such as multiple access requests to a business object. The service manager may provide security and data integrity functionality to ensure against inconsistent and erratic runtime behavior. The service manager typically presents a client proxy (e.g., using a Web Services agent) that the business user can interface to within the application layer. The client proxy is typically able to provide batch processing of business objects. For example, a table of business object identifiers can be provided to the client proxy along with one or more actions (e.g., RETRIEVE) to be performed on each business object.

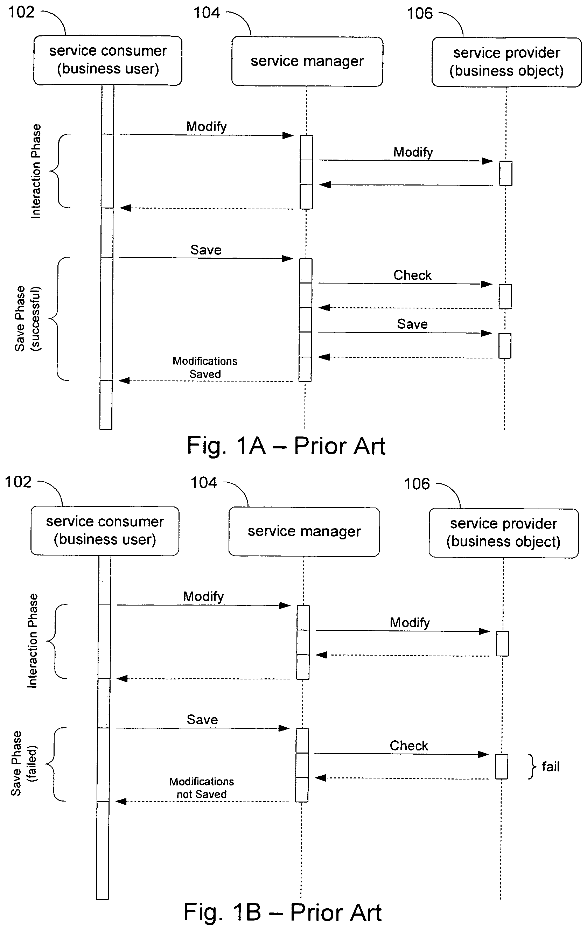

Fig. 1A illustrates a workflow process between a business application (service consumer) 102 and a service provider 106, mediated by a service manager 104. The sequence shown in Fig. 1A represents batch processing of multiple business objects. In an Interaction phase, the service consumer 102 issues or otherwise provides a series of modify operations for one or more business objects to the service manager 104. For example, at the end of the day, a sales person may initiate (e.g., via a user interface, UI, of the business application) an upload of the day's sales records to a CRM system. The business application 102 may initiate a batch job to process the business objects representing the sales records.

The service manager 104 communicates the modify operations received from the service consumer 102 to the service provider 106 to make the modifications. The service consumer 102 triggers a Save phase, for example, by calling a save method in the service manager 104. The service manager 104, in turn, calls a check method in the service provider 106 to trigger "check" processing to verify the modifications made to the business objects. If the service provider 106 does not issue an error, then the service manager 104 calls the save method in the service provider to begin "save" processing. Fig. 1A illustrates a successful batch processing workflow.

Fig. 1B illustrates a workflow process scenario where one or more errors are discovered during check processing of the modified business objects performed in the service provider 106. As can be seen, the service manager 104 is notified of the error, and does not call the save method in the service provider 106 because of the error(s). The batch job is not saved, with the side effect that those business objects that were modified without error are also not saved. Accordingly, the service consumer 102 is required to resubmit the entire job after correcting the cause(s) of the errors.

Document US 7,536,673 B2 relates to methods and apparatus for application business processing. Business object processing includes receiving a plurality of business object operations for an application, wherein at least one of input in the script comprises a multi-dimensional data type, and initiating execution of the operations.

### SUMMARY OF THE INVENTION.

One aspect of the present invention is a method as defined in independent claim 1. Another aspect of the invention is an apparatus as defined in independent claim 6. Still another aspect of the invention is directed to a storage medium with program implementing the method as defined in claim 10. Further embodiments of the invention are specified in the respective appended dependent claims.

### BRIEF DESCRIPTION OF THE DRAWINGS

Fig. 1A illustrates conventional batch processing without occurrence of an error.
Fig. 1B illustrates conventional batch processing where an error has arisen during a SAVE phase.
Fig. 2 shows a work flow in accordance with embodiments of the present invention.
Fig. 3 shows another work flow in accordance with embodiments of the present invention.
Fig. 4 depicts a hardware configuration in accordance with the present invention.

### DETAILED DESCRIPTION

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

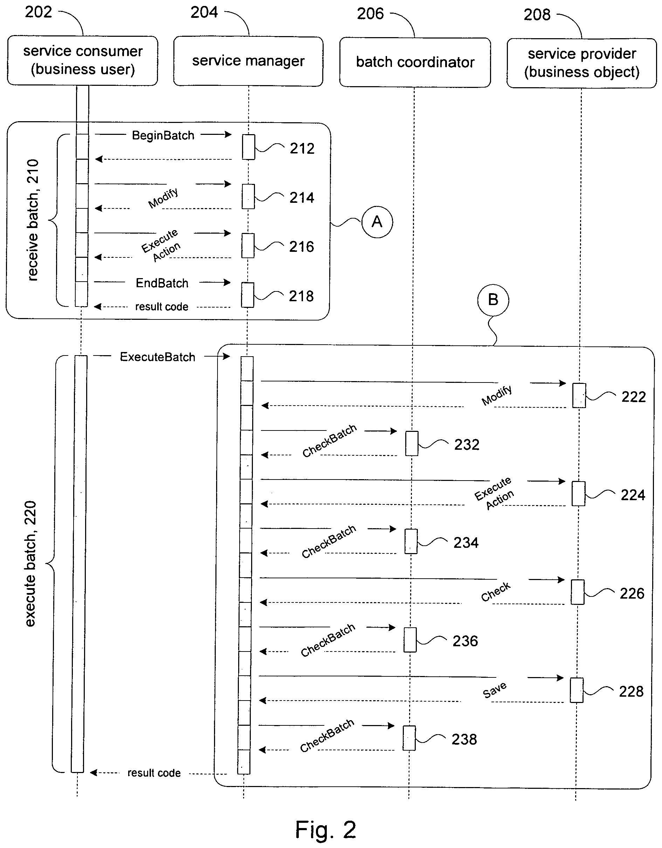

In embodiments, a work flow, such as illustrated by the sequence diagram in Fig. 2, may comprise actions initiated by a sequence of communications between a service consumer 202, a service manager 204, a batch coordinator 206, and a service provider 208. In embodiments, the service consumer 202 may be a business application interfaced with the service manager 204 (e.g., via a Web Services interface). The work flow may be partitioned into two major steps: a batch receiving step 210 (processing block A) and a batch processing step 220 (processing block B).

In the batch receiving step 210, the service consumer 202 submits a "batch container" (batch job) for processing a set of business object instances. A batch container logically represents a number N of business object instances along with one or more operations to be performed on each business object instance. For example, suppose at the end of a business week, customer record business objects from a retail location of a business may need to be updated in the business' master data. The service consumer 202 may be a business application that communicates with the service manager 204 (e.g., via a Web Services interface) to submit the batch container to the service manager. The set of operations performed on a business object instance may vary from one business object instance to another.

In a step 212, the service consumer 202 issues a BeginBatch command to the service manager 204 to process a batch job. The BeginBatch command signals the service manager 204 to open or create a new batch container. The service manager 204 may issue a response (e.g., OK) to the service consumer 202 to indicate that the BeginBatch command has been successfully processed. The batch job may be communicated to the service manager 204 by any suitable manner. For example, the service consumer 202 may generate a batch file which is then made known to the service manager 204 (e.g., the file is sent to the service manager, the location of the file is made known to the service manager, etc.) The batch file may list the business object instances and corresponding operations. The operations may include core services that each business object provides (e.g., MODIFY, RETRIEVE, and so on) and may include specific services that are unique to each business object (e.g., ACTION). The service consumer 202 may communicate the batch job to the service manager 204, one business object instance at a time along with the desired operations to be performed on the business object instance.

In accordance with the present invention, the service manager 204 records each MODIFY operation (step 214), without making modifications to the business object instance. Likewise, service manager 204 records the information pertaining to desired ACTIONS (step 216), without making modifications to the business object instance.

In a step 218, the service consumer 202 issues an EndBatch command to the service manager 204. The EndBatch command signals the service manager 204 to close the batch container. The service manager 204 may issue a response (e.g., OK) to the service consumer 202 to indicate that the batch container has been successfully created.

The service consumer 202 may then repeat steps 212 - 218 for another batch container. For example, the business application may submit one batch job for updating customer records and another batch job for updating inventory records. Repeating steps 212 - 218 will create in the service manager 204 another batch container for processing another batch job. In embodiments, when the service consumer 202 has submitted all its batch jobs, it may then issue an ExecuteBatch command to the service manager 204. The ExecuteBatch command will trigger the batch processing step 220.

In the batch processing step 220, the service manager 204 coordinates between the batch coordinator 206 and the service provider 208 in order to process one or more batch containers submitted by the service consumer 202. In embodiments, the batch processing step 220 is performed for each batch container that was created in the batch receiving step 210. In particular, steps 222-238 may be performed for each batch container. As will be explained below, the actual processing of business object instances in a batch container in accordance with the present invention is partitioned into specific processing stages with error checking and error processing for each processing stage.

In embodiments, one processing stage is the processing of core services on the business object instances in the batch container, performed in a modify step 222. The core service operations for each business object instance recorded above in step 214 are performed by making suitable calls to the service provider 208. In particular, the service manager 204 communicates with the service provider 208 to invoke the core service methods of the business object to perform the operations on the business object instance. The service provider 208 may respond to the service manager 204 with a result code indicating whether or not the core services were successfully performed on the business object instances.

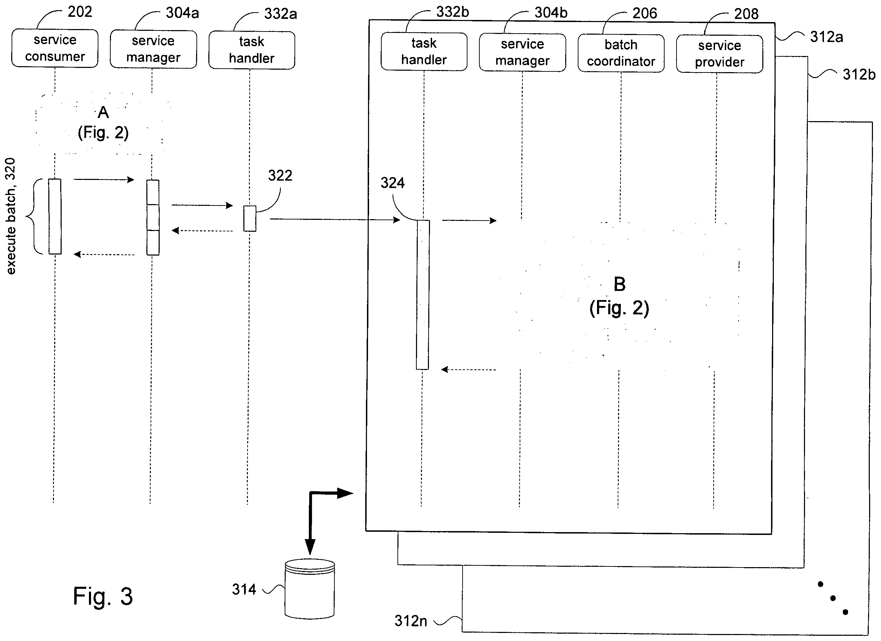

In a step 232, the service manager 204 may invoke an error checking method in the batch coordinator 206. Results from batch processing in the modify step 222 (e.g., business object name, node identifiers, error messages, and so on) may be passed to the batch coordinator 206. In some embodiments, the service manager 204 may invoke a callback method (e.g., a CHECKBATCH method) to the batch coordinator 206.The batch coordinator 206 may then decide how to proceed. For example, the batch coordinator 206 may identify those business object instances which failed while being processed in step 222, and provide a list of failed business object instances to the service manager 204. In an embodiment, for example, results from the modify step 222 may be expressed using a result code for each core service operation performed for each business object instance. For each such result code, the batch coordinator 206 may be programmed (e.g., using a SWITCH statement) to mark the business object instance as PASS, FAIL, or to take some corrective action. If a result code is not recognized, the batch coordinator 206 may log the business object instance (e.g., its ID), the result code, and any related information in an error log (e.g., data store 314 shown in Fig. 3). The batch coordinator 206 sends a list of the failed business object instances to the service manager 204. In some embodiments, the batch coordinator 206 may remove the failed business object instances from the batch container, while allowing further processing of the other business object instances.

In the next processing stage, actions are executed for the business object instances in a step 224. The service manager 204 receives results of the error checking of step 232. If all of the business object instances were processed in step 222 without error, then processing of the batch container continues with processing of actions that are specific to the business object instances. The actions recorded above in step 216 that are specific to the business object instance are performed by making suitable calls to the service provider 208. In particular, the service manager 204 makes calls (e.g., ACTION calls) to the service provider 208 to invoke the specific methods of the business object to execute the actions. The service provider 208 may respond to the service manager 204 with a result code indicating whether or not the actions were successfully performed on the business object instances.

On the other hand, if some business object instances failed in step 222, then those business object instances will not proceed to step 224. Instead, the service manager 204 may perform a "transaction cleanup" on the failed business object instances, and repeat step 222 and step 232. For example, suppose a number of modifications are made to a business object. In some embodiments, the modifications may be stored in a transactional buffer (e.g., one or more internal data tables associated with the business object), to be saved in a later step (e.g., step 228). If a failure subsequently occurs (e.g., in an ACTION call), then the transactional buffer may be cleared (e.g., because the data may deemed to be invalid). This is an example of a transaction cleanup.

It can be appreciated that by filtering out the failed business object instances, the service manager 204 can forward business object instances that were successfully processed in step 222 on to the next processing stage, namely step 224, thus avoiding having to abort the entire batch job due to the occurrence of one or more failed business object instances. At the same time, the service manager 204 may re-process a failed business object instance if transaction cleanup can be performed. Otherwise, the service manager 204 may log the business object instance to an error log and no further processing is performed.

In a step 234, the service manager 204 may invoke the error checking method in the batch coordinator 206 (e.g., the CHECKBATCH method described in step 232) to process the results of the execute actions step 224. Results from batch processing in the service provider 208 in the execute actions step 224 may be passed to the batch coordinator 206. The batch coordinator 206 identifies those business object instances that failed and provides a list to the service manager 204. In an embodiment, for example, results from the execute actions step 224 may be expressed via a result code for each method that is performed for each business object instance. For each such result code, the batch coordinator 206 may be programmed (e.g., using a SWITCH statement) to mark the business object instance as PASS, FAIL, or to take some other action. If a result code is not recognized, the batch coordinator 206 may log the business object instance (e.g., its ID), the result code, and any related information in an error log. The batch coordinator 206 sends a list of the failed business object instances to the service manager 204.

In the next processing stage, a final check of the modified business object instances in the batch container is made in a step 226; e.g., by invoking a CHECK method of the business object. The service manager 204 receives results of the error checking from step 234. If all of the business object instances were processed in step 224 without error, then the modified business object instances are checked. In particular, the service manager 204 may invoke the service provider 208 to call a suitable CHECK method for each business object instance. The service provider 208 may respond to the service manager 204 with a result code indicating whether or not the business object instances passed the check processing step or not.

For example, the CHECK method may be invoked by the service manager 204 on the business object service provider 208 to trigger "Consistency" checks. This means that the business objects check their transactional states/buffers to determine whether it is possible and permitted to store their data in the database. If there is any inconsistency in the business object state/buffer then the BO service provider 208 can indicate a rejection (e.g., via a return value of the CHECK method) and the transaction will not be saved by the service manager 204. Typically, error messages may be generated and these error messages may then be displayed in a user interface, if the consumer is a user interface. In an embodiment, the error messages may be stored in an error log (e.g., data store 314 shown in Fig. 3).

On the other hand, if some business object instances failed in step 224, then those business object instances will not proceed to step 226. Instead, the service manager 204 may perform a transaction cleanup on the failed business object instances, and repeat step 224 and step 234. It can be appreciated that by filtering out the failed business object instances, the service manager 204 can forward business object instances that were successfully processed in the execute actions step 224 on to the next processing stage, namely the check step 226. At the same time, the service manager 204 may re-process a failed business object instance if transaction cleanup can be performed. Otherwise, the service manager 204 may log the business object instance to an error log and no further processing is performed.

In a step 236, the service manager 204 may invoke the error checking method in the batch coordinator 206 to process the results of the check step 226. Results from the check step 226 may be passed to the batch coordinator 206. The batch coordinator 206 identifies those business object instances that failed and provides a list to the service manager 204. In an embodiment, for example, results from the check step 226 may be expressed via a result code for each method that is performed for each business object instance. For each such result code, the batch coordinator 206 may be programmed (e.g., using a SWITCH statement) to mark the business object instance as PASS, FAIL, or to take some other action. If a result code is not recognized, the batch coordinator 206 may log the business object instance (e.g., its ID), the result code, and any related information in an error log. The batch coordinator 206 sends a list of the failed business object instances to the service manager 204.

In the next processing stage, the modified and verified business object instances in the batch container are saved in a step 228 (e.g., written out to a data store). The service manager 204 receives results of the error checking from step 236. If all of the business object instances were checked in step 226 as having no errors, then all of the modified business object instances may be saved. In particular, the service manager 204 may invoke the service provider 208 to call a suitable save method for each business object instance; e.g., to write the modified business object instance to a database. The service provider 208 may respond to the service manager 204 with a result code indicating whether or not the business object instances were verified.

On the other hand, if some business object instances were not checked in step 226 (i.e., failed check processing), then those business object instances will not proceed to the save step 228. Instead, the service manager 204 may perform a transaction cleanup on the failed business object instances, and repeat step 226 and step 236. By filtering out the failed business object instances, the service manager 204 can forward business object instances that were successfully processed in the check step 226 on to the next processing stage. At the same time, the service manager 204 may re-process a failed business object instance if transaction cleanup can be performed. Otherwise, the service manager 204 may log the business object instance to an error log and no further processing is performed.

In a step 238, the service manager 204 may invoke an error checking method in the batch coordinator 206 to check the results of the save step 228. The results may be passed to the error checking method in the batch coordinator 206. The batch coordinator 206 identifies those business object instances that failed and provides a list to the service manager 204. In an embodiment, for example, results from the save step 228 may be expressed via a result code for each method that is performed for each business object instance. For each such result code, the batch coordinator 206 may be programmed (e.g., using a SWITCH statement) to mark the business object instance as PASS, FAIL, or to take some other action. If a result code is not recognized, the batch coordinator 206 may log the business object instance (e.g., its ID), the result code, and any related information in an error log. The batch coordinator 206 sends a list of the failed business object instance instances to the service manager 204.

The service manager 204 may respond to the service consumer 202 with a result code. In embodiments, the code may indicate that all the business object instances were successfully updated and saved, or that some of the business object instances were successfully updated and saved, or that none of the business object instances were successfully updated and saved. In addition, a report may be provided that lists the failed business object instances, and at which processing stage the failure occurred. The report may include information about retries and other auxiliary information. If there is another batch container to be processed by the service manager 204, the foregoing steps 222-238 may be repeated.

Referring back to step 220, when the service consumer 202 issues the ExecuteBatch command to the service manager 204, the service consumer may indicate to the service manager 204 to process the batch job (batch container) in a single transaction. This is the scenario that is illustrated in the Fig. 2. In embodiments, the service manager 204 may process the batch container in multiple transactions. For example, suppose a batch job comprises 1000 business object instances. It may be desirable to process the batch container as ten separate transactions of 100 business object instances per transaction. The service manager 204 may instantiate a process for each transaction to process the ten transactions in parallel. In embodiments, the service manager 204 may instantiate a process for each business object instance in the batch container. For instance, if the batch container comprised 20 business object instances, it may be practical to instantiate 20 processes, one for each business object instance. The service manager 204 may determine on its own whether or not to partition a batch container into multiple transactions (processes). In an embodiment, the service consumer 202 may instruct the service manager 204 whether and how to partition a batch job into multiple transactions.

Fig. 3 illustrates the workflow in an embodiment for partitioning a batch job (batch container) into multiple transactions. The service manager comprises a service manager frontend 304a and a service manager backend 304b. The service manager front end 304a communicates with the service consumer 202. The service manager frontend 304a communicates with a task handler frontend 302a. As will be explained below, the task manager frontend 332a instantiates processes 312a, 312b-312n. Each process 312a, includes an instantiation of a task handler backend 332b, the service manager backend 304b, the batch coordinator 206, and the service provider 208.

The batch receiving step 210 shown in Fig. 2 is represented as processing block A in Fig. 3, and proceeds between service consumer 202 and service manager frontend 304a as explained above in connection with steps 212-218. When the service consumer 202 has submitted all its batch jobs, it may then issue an ExecuteBatch command to the service manager frontend 304a to execute the batch job(s) (step 320).

In a step 322, the service manager frontend 304a communicates with the task handler frontend 332a to instantiate one or more processes 312a-312n. As explained above, the service consumer 202 may dictate how to partition each batch job into two or more transactions. Alternatively, the service manager frontend 304a may make that determination independently of the service consumer 202. In an embodiment, the task handler frontend 332a may partition a batch container into two or more transactions by a process called serialization. The task handler frontend 332a instantiates a process 312a for each transaction. The task handler frontend 332a communicates (e.g., via inter-process communication) with the task handler backend 332b in each instantiated process 312a to set up processing of the portion of the batch container corresponding to its associated transaction. In a step 324, the task handler backend 332b deserializes the batch container portion for processing by the service manager backend 304b in accordance with the processing block B shown and described in Fig. 2.

When a processing in the process block B completes, errors accumulated during the processing may be collected by the task handler backend 332b. In an embodiment, the task handler backend 332b can log failures to the error log 314 for further evaluation. For example, in an embodiment, a separate task (process) may be scheduled on a regular basis to check the error log 314, and create a workflow to assess and otherwise resolve the errors.

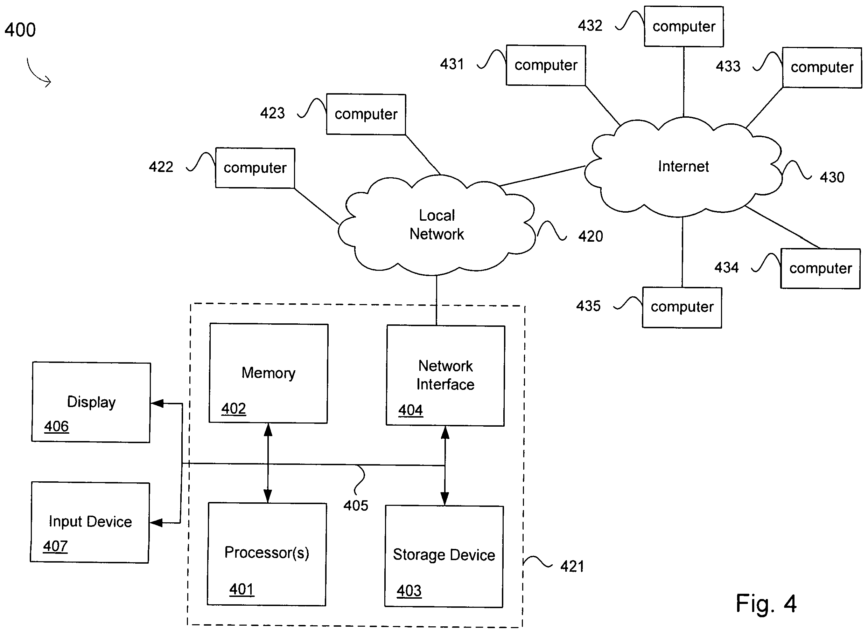

Referring to Fig. 4, in embodiments, a computer system 400 can be configured to operate in accordance with aspects of the present invention. For example, computer system 400 may be configured as the service consumer 202; e.g., executing a business application. Another computer system 422 may be configured to support the service manager, batch coordinator, service provider, and task handler components shown in Figs. 2 and 3.

A computer system 400 may comprise a data processor subsystem 401 of one or more data processing units. A memory subsystem 402 may comprise random access memory (usually volatile memory such as DRAM) and non-volatile memory such as FLASH memory, ROM, and so on. A storage subsystem 403 may comprise one or more mass storage devices such as hard disk drives and the like. The storage subsystem 403 may include remote storage systems; e.g., for data mirroring, remote backup and such. A network interface subsystem 404 can provide users with access to the computer system 400, for example over a telecommunication network. A system of buses 405 can interconnect the foregoing subsystems, providing control lines, data lines, and/or voltage supply lines to/from the various subsystems. The computer system 400 may include a suitable display(s) 412 and input devices 411 such as a keyboard and a mouse input device.

The memory subsystem 402 may have stored in the non-volatile memory computer executable programs, which when executed can cause the data processing subsystem 401 to operate in accordance with aspects of the present invention. For example, the memory subsystem 402 may include computer executable programs that constitute the service manager 204 (304a, 304b), the batch coordinator 206, the service provider 208, and the task handler (332a, 332b). The storage subsystem 403 may provide storage for the various database components such as the error log 314.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the scope of the invention as defined by the claims.

## Claims

1. A computer-implemented method for processing a plurality of business objects that represent individual classes of data that a business application manages, the method comprising operating a computer to perform steps of:
receiving (210) from a client system (202) information that identifies a plurality of business objects;
receiving (212) from the client system (202) information that indicates one or more operations to be performed on the plurality of business objects;
storing (214) information relating to the plurality of business objects and to the one or more operations without making modifications to the business objects;
receiving (216) from the client system (202) a trigger; and
in response to receiving the trigger, operating (220) the computer to perform steps of:
altering (222, 224, 226) one or more business objects from among the plurality of business objects in accordance with the one or more operations;
performing (232, 234, 236) a first error processing of any errors produced during the altering (222, 224, 226);
saving (228) one or more of the plurality of business objects that were successfully altered in the altering (222, 224, 226) step, wherein failed business objects of the plurality of business objects are filtered out; and
performing (222, 224, 226, 232, 234, 236) a second error processing on the failed business objects by re-processing the failed business objects if a transaction cleanup on the failed business objects can be performed, or otherwise by logging the failed business objects to an error log.

2. The method of claim 1 wherein the steps of error processing include identifying an error from among a plurality of predetermined errors and performing an action associated with the identified predetermined error.

3. The method of claim 2 wherein if the error is not among the plurality of predetermined errors, then recording the error in an error log.

4. The method of any one of the preceding claims wherein the step of altering includes invoking one or more core services for each business object and invoking one or more specific services that are unique to each of the business objects, wherein the step of performing first error processing includes performing a third error processing of any errors produced during invocation of the one or more core services and performing a fourth error processing of any errors produced during invocation of the specific services.

5. The method of any one of the preceding claims further comprising operating the computer to perform steps of:
instantiating a first process for a first set of the business objects to perform the steps of altering, performing a first error processing, saving, and performing a second error processing on the first set of business objects; and
instantiating a second process for a second set of the business objects to perform the steps of altering, performing a first error processing, saving, and performing a second error processing on the second set of business objects.

6. A computer system comprising:
a data processor;
a data store having stored thereon computer executable program code, wherein the computer executable program code is configured to program the data processor to:
receive (210) from a client system (202) information that identifies a plurality of business objects that represent individual classes of data that a business application manages;
receive (212) from the client system (202) information that indicates one or more operations to be performed on the plurality of business objects;
store (214) information relating to the plurality of business objects and to the one or more operations without making modifications to the business objects; and
receive (216) from the client system (202) a trigger, and in response thereto:
alter (222, 224, 226) one or more business objects from among the plurality of business objects in accordance with the one or more operations;
perform (232, 234, 236) a first error processing of any errors produced during the altering (222, 224, 226);
save (228) one or more of the plurality of business objects that were successfully altered in the altering step (222, 224, 226), wherein failed business objects of the plurality of business objects are filtered out; and
perform (222, 224, 226, 232, 234, 236) a second error processing on the failed business objects by re-processing the failed business objects if a transaction cleanup on the failed business objects can be performed, or otherwise by logging the failed business objects to an error log.

7. The computer system of claim 6 wherein the first and second error processing include identifying an error from among a plurality of predetermined errors and performing an action associated with the identified predetermined error.

8. The computer system of any one of claims 6 to 7 wherein to alter one or more business objects includes to invoke one or more core services for each business object and invoking one or more specific services that are unique to each of the business objects, wherein to perform first error processing includes to perform a third error processing of any errors produced during invocation of the one or more core services and to perform a fourth error processing of any errors produced during invocation of the specific services.

9. The computer system of any one of claims 6 to 8 wherein the data processor:
instantiates a first process for a first set of the business objects to alter, perform a first error processing, save, and perform a second error processing on the first set of business objects; and
instantiates a second process for a second set of the business objects to alter, perform a first error processing, save, and perform a second error processing on the second set of business objects.

10. A computer program product comprising a non-transitory computer readable storage medium having stored thereon executable program code configured to cause a computer system to perform a method according to any of claims 1 to 5.

## Patentansprüche

1. Ein computerimplementiertes Verfahren zur Verarbeitung einer Vielzahl von Geschäftsobjekten, die einzelne Klassen von Daten repräsentieren, die von einer betriebswirtschaftlichen Anwendung verwaltet werden, wobei das Verfahren das Betreiben eines Computers umfasst, um die folgenden Schritte durchzuführen:
empfangen (210), von einem Client-System (202), von Informationen, die eine Vielzahl von Geschäftsobjekten identifizieren;
empfangen (212), vom Client-System (202), von Informationen, die eine oder mehrere Operationen angeben, die an der Vielzahl von Geschäftsobjekten auszuführen sind;
abspeichern (214) von Informationen mit Bezug auf die Vielzahl von Geschäftsobjekten und auf die eine oder die mehreren Operationen, ohne Änderungen an den Geschäftsobjekten vorzunehmen;
empfangen (216), vom Client-System (202), eines Triggers; und
als Antwort auf das Empfangen des Triggers, den Computer dazu betreiben (220), folgende Schritte durchzuführen:
ändern (222, 224, 226) des einen oder der mehreren Geschäftsobjekte aus der Vielzahl an Geschäftsobjekten, in Übereinstimmung mit der einen oder den mehreren Operationen;
durchführen (232, 234, 236) einer ersten Fehlerverarbeitung von irgendeinem der Fehler, die währen der Änderung (222, 224, 226) erzeugt worden sind;
speichern (228) von einem oder von mehreren aus der Vielzahl an Geschäftsobjekten, die im Änderungsschritt (222, 224, 226) erfolgreich geändert worden sind, wobei fehlgeschlagene Geschäftsobjekte aus der Vielzahl an Geschäftsobjekten ausgefiltert werden; und
durchführen (222, 224, 226, 232, 234, 236) einer zweiten Fehlerverarbeitung an den fehlgeschlagenen Geschäftsobjekten, indem die fehlgeschlagenen Geschäftsobjekte nochmals verarbeitet werden, falls eine Transaktionsbereinigung an den fehlgeschlagenen Geschäftsobjekten vorgenommen werden kann, oder, anderenfalls, indem die fehlgeschlagenen Geschäftsobjekte in einem Fehlerprotokoll protokolliert werden.

2. Das Verfahren nach Anspruch 1, wobei die Schritte der Fehlerverarbeitung das Identifizieren eines Fehlers aus einer Vielzahl an vorbestimmten Fehlern beinhaltet, und das Durchführen einer Aktion, die mit dem identifizierten vorbestimmten Fehler verknüpft ist.

3. Das Verfahren nach Anspruch 2, wobei: falls der Fehler nicht unter der Vielzahl an vorbestimmten Fehlern ist, dann aufnehmen des Fehlers in einem Fehlerprotokoll.

4. Das Verfahren nach irgendeinem der vorhergehenden Ansprüche, wobei der Änderungsschritt das Aufrufen von einem oder mehreren Kerndiensten für jedes Geschäftsobjekt und das Aufrufen von einem oder mehreren spezifischen Diensten beinhaltet, die für jedes der Geschäftsobjekte einzigartig sind, wobei der Schritt des Durchführens der ersten Fehlerverarbeitung Folgendes beinhaltet: das Durchführen einer dritten Fehlerverarbeitung irgendwelcher Fehler, die während des Aufrufens des einen oder der mehreren Kerndienste erzeugt worden sind, und das Durchführen einer vierten Fehlerverarbeitung irgendwelcher Fehler, die während des Aufrufens spezifischen Dienste erzeugt worden sind.

5. Das Verfahren nach irgendeinem der vorhergehenden Ansprüche, das des Weiteren das Betreiben des Computers umfasst, um die folgenden Schritte zu vollziehen:
instantiieren eines ersten Prozesses für einen ersten Satz der Geschäftsobjekte, zur Durchführung der Schritte des Änderns, des Durchführens einer ersten Fehlerverarbeitung, des Speicherns und des Durchführens einer zweiten Fehlerverarbeitung am ersten Satz der Geschäftsobjekte; und
instantiieren eines zweiten Prozesses für einen zweiten Satz der Geschäftsobjekte zur Durchführung der Schritte des Änderns, des Durchführens einer ersten Fehlerverarbeitung, des Speicherns und des Durchführens einer zweiten Fehlerverarbeitung am zweiten Satz der Geschäftsobjekte.

6. Ein Computersystem, das Folgendes umfasst:
einen Datenprozessor;
einen Datenspeicher, auf dem ein von einem Computer ausführbarer Programmcode gespeichert ist, wobei der von einem Computer ausführbare Programmcode konfiguriert ist, um den Datenprozessor so zu programmieren, dass er Folgendes vollzieht:
empfangen (210), von einem Client-System (202), von Informationen, die eine Vielzahl von Geschäftsobjekten identifizieren, die einzelne Klassen von Daten repräsentieren, die von einer betriebswirtschaftlichen Anwendung verwaltet werden;
empfangen (212), vom Client-System (202), von Informationen, die eine oder mehrere Operationen angeben, die an der Vielzahl von Geschäftsobjekten auszuführen sind;
abspeichern (214) von Informationen mit Bezug auf die Vielzahl von Geschäftsobjekten und auf die eine oder die mehreren Operationen, ohne Änderungen an den Geschäftsobjekten vorzunehmen; und
empfangen (216), vom Client-System (202), eines Triggers; und als Antwort darauf:
ändern (222, 224, 226) von einem oder mehreren Geschäftsobjekten aus der Vielzahl an Geschäftsobjekten, in Übereinstimmung mit der einen oder den mehreren Operationen;
durchführen (232, 234, 236) einer ersten Fehlerverarbeitung von irgendeinem der Fehler, die währen der Änderung (222, 224, 226) erzeugt worden sind;
speichern (228) von einem oder von mehreren aus der Vielzahl an Geschäftsobjekten, die im Änderungsschritt (222, 224, 226) erfolgreich geändert worden sind, wobei fehlgeschlagene Geschäftsobjekte aus der Vielzahl an Geschäftsobjekten ausgefiltert werden; und
durchführen (222, 224, 226, 232, 234, 236) einer zweiten Fehlerverarbeitung an den fehlgeschlagenen Geschäftsobjekten, indem die fehlgeschlagenen Geschäftsobjekte nochmals verarbeitet werden, falls eine Transaktionsbereinigung an den fehlgeschlagenen Geschäftsobjekten - vorgenommen werden kann, oder, anderenfalls, indem die fehlgeschlagenen Geschäftsobjekte in einem Fehlerprotokoll protokolliert werden.

7. Das Computersystem nach Anspruch 6, wobei die erste und die zweite Fehlerverarbeitung das Identifizieren eines Fehlers aus einer Vielzahl an vorbestimmten Fehlern beinhalten, und das Durchführen einer Aktion, die mit dem identifizierten vorbestimmten Fehler verknüpft ist.

8. Das Computersystem nach irgendeinem der Ansprüche 6 bis 7, wobei das Ändern von einem oder mehreren Geschäftsobjekten das Aufrufen von einem oder mehreren Kerndiensten für jedes Geschäftsobjekt und das Aufrufen von einem oder mehreren spezifischen Diensten beinhaltet, die für jedes der Geschäftsobjekte einzigartig sind, wobei das Durchführen der ersten Fehlerverarbeitung Folgendes beinhaltet: das Durchführen einer dritten Fehlerverarbeitung irgendwelcher Fehler, die während des Aufrufens des einen oder der mehreren Kerndienste erzeugt worden sind, und das Durchführen einer vierten Fehlerverarbeitung irgendwelcher Fehler, die während des Aufrufens spezifischen Dienste erzeugt worden sind.

9. Das Computersystem nach irgendeinem der Ansprüche 6 bis 8, wobei der Datenprozessor Folgendes tut:
instantiieren eines ersten Prozesses für einen ersten Satz der Geschäftsobjekte, zur Durchführung der Schritte des Änderns, des Durchführens einer ersten Fehlerverarbeitung, des Speicherns und des Durchführens einer zweiten Fehlerverarbeitung am ersten Satz der Geschäftsobjekte; und
instantiieren eines zweiten Prozesses für einen zweiten Satz der Geschäftsobjekte zur Durchführung der Schritte des Änderns, des Durchführens einer ersten Fehlerverarbeitung, des Speicherns und des Durchführens einer zweiten Fehlerverarbeitung am zweiten Satz der Geschäftsobjekte.

10. Ein Computerprogrammprodukt, das ein nicht-flüchtiges, computerlesbares Speichermedium umfasst, auf dem ein ausführbarer Programmcode gespeichert ist, der konfiguriert ist, um ein Computersystem dazu zu bringen ein Verfahren nach irgendeinem der Ansprüche 1 bis 5 durchzuführen.

## Revendications

1. Un procédé mis en oeuvre par ordinateur pour le traitement d'une pluralité d'objets commerciaux qui représentent des classes individuelles de données gérées par une application de gestion, le procédé comprenant le fait d'exploiter un ordinateur afin d'effectuer les étapes suivantes consistant à :
recevoir (210) de la part d'un système client (202) des informations identifiant une pluralité d'objets commerciaux ;
recevoir (212) de la part du système client (202) des informations indiquant une ou plusieurs opérations à exécuter sur la pluralité d'objets commerciaux ;
stocker (214) des informations concernant la pluralité d'objets commerciaux et la ou les opérations, sans apporter des modifications aux objets commerciaux ;
recevoir (216) de la part du système client (202) un déclencheur ; et
en réponse à la réception du déclencheur, exploiter (220) l'ordinateur afin d'effectuer les étapes suivantes consistant à :
altérer (222, 224, 226) un ou plusieurs objets commerciaux parmi la pluralité d'objets commerciaux conformément à la ou les opérations ;
effectuer (232, 234, 236) un premier traitement des erreurs de toute erreur produite pendant l'altération (222, 224, 226) ;
enregistrer (228) un ou plusieurs de la pluralité d'objets commerciaux qui ont été altérés avec succès dans l'étape d'altération (222, 224, 226), sachant que des objets commerciaux échoués de la pluralité d'objets commerciaux sont séparés par filtration ; et
effectuer (222, 224, 226, 232, 234, 236) un deuxième traitement des erreurs sur les objets commerciaux échoués en re-traitant les objets commerciaux échoués si une épuration de transaction (*transaction cleanup*) peut être effectuée sur les objets commerciaux échoués, ou dans le cas contraire en enregistrant les objets commerciaux échoués dans un journal des erreurs.

2. Le procédé d'après la revendication 1, sachant que les étapes de traitement des erreurs incluent le fait d'identifier une erreur parmi une pluralité d'erreurs prédéterminées et le fait d'effectuer une action associée à l'erreur prédéterminée identifiée.

3. Le procédé d'après la revendication 2, sachant que si l'erreur ne se trouve pas parmi la pluralité d'erreurs prédéterminées, alors enregistrer l'erreur dans un journal des erreurs.

4. Le procédé d'après une quelconque des revendications précédentes, sachant que l'étape d'altération inclut le fait d'invoquer un ou plusieurs services essentiels pour chaque objet commercial et le fait d'invoquer un ou plusieurs services spécifiques qui sont particuliers à chacun des objets commerciaux, sachant que l'étape consistant à exécuter le premier traitement des erreurs inclut le fait d'exécuter un troisième traitement des erreurs de toute erreur produite pendant l'invocation du ou des services essentiels et le fait d'exécuter un quatrième traitement des erreurs de toute erreur produite pendant l'invocation du ou des services spécifiques.

5. Le procédé d'après une quelconque des revendications précédentes, comprenant en outre le fait d'exploiter l'ordinateur afin d'effectuer les étapes consistant à :
instancier un premier processus pour un premier ensemble des objets commerciaux afin d'effectuer les étapes consistant à altérer, exécuter un premier traitement des erreurs, enregistrer, et exécuter un deuxième traitement des erreurs sur le premier ensemble d'objets commerciaux ; et
instancier un deuxième processus pour un deuxième ensemble des objets commerciaux afin d'effectuer les étapes consistant à altérer, exécuter un premier traitement des erreurs, enregistrer, et exécuter un deuxième traitement des erreurs sur le deuxième ensemble d'objets commerciaux.

6. Un système informatique, comprenant :
un processeur de données ;
un magasin de données sur lequel est stocké un code de programme exécutable par ordinateur, sachant que le code de programme exécutable par ordinateur est configuré pour programmer le processeur de données afin de :
recevoir (210) de la part d'un système client (202) des informations identifiant une pluralité d'objets commerciaux qui représentent des classes individuelles de données gérées par une application de gestion ;
recevoir (212) de la part du système client (202) des informations indiquant une ou plusieurs opérations à exécuter sur la pluralité d'objets commerciaux ;
stocker (214) des informations concernant la pluralité d'objets commerciaux et la ou les opérations, sans apporter des modifications aux objets commerciaux ; et
recevoir (216) de la part du système client (202) un déclencheur, et en réponse à cela :
altérer (222, 224, 226) un ou plusieurs objets commerciaux parmi la pluralité d'objets commerciaux conformément à la ou les opérations ;
effectuer (232, 234, 236) un premier traitement des erreurs de toute erreur produite pendant l'altération (222, 224, 226) ;
enregistrer (228) un ou plusieurs de la pluralité d'objets commerciaux qui ont été altérés avec succès durant l'étape d'altération (222, 224, 226), sachant que des objets commerciaux échoués de la pluralité d'objets commerciaux sont séparés par filtration ; et
effectuer (222, 224, 226, 232, 234, 236) un deuxième traitement des erreurs sur les objets commerciaux échoués en re-traitant les objets commerciaux échoués si une épuration de transaction (*transaction cleanup*) peut être effectuée sur les objets commerciaux échoués, ou dans le cas contraire en enregistrant les objets commerciaux échoués dans un journal des erreurs.

7. Le système informatique d'après la revendication 6, sachant que le premier et le deuxième traitement des erreurs incluent le fait d'identifier une erreur parmi une pluralité d'erreurs prédéterminées et le fait d'effectuer une action associée à l'erreur prédéterminée identifiée.

8. Le système informatique d'après une quelconque des revendications de 6 à 7, sachant que le fait d'altérer un ou plusieurs objets commerciaux inclut le fait d'invoquer un ou plusieurs services essentiels pour chaque objet commercial et le fait d'invoquer un ou plusieurs services spécifiques qui sont particuliers à chacun des objets commerciaux, sachant que l'étape consistant à exécuter le premier traitement des erreurs inclut le fait d'exécuter un troisième traitement des erreurs de toute erreur produite pendant l'invocation du ou des services essentiels et le fait d'exécuter un quatrième traitement des erreurs de toute erreur produite pendant l'invocation du ou des services spécifiques.

9. Le système informatique d'après une quelconque des revendications de 6 à 8, sachant que le processeur de données
instancie un premier processus pour un premier ensemble des objets commerciaux afin d'effectuer les étapes consistant à altérer, exécuter un premier traitement des erreurs, enregistrer, et exécuter un deuxième traitement des erreurs sur le premier ensemble d'objets commerciaux ; et
instancie un deuxième processus pour un deuxième ensemble des objets commerciaux afin d'effectuer les étapes consistant à altérer, exécuter un premier traitement des erreurs, enregistrer, et exécuter un deuxième traitement des erreurs sur le deuxième ensemble d'objets commerciaux.

10. Un produit programme informatique comprenant un support de stockage non transitoire lisible par ordinateur sur lequel est stocké un code de programme exécutable configuré pour amener un système informatique à effectuer un procédé d'après une quelconque des revendications de 1 à 5.
